# EUROPÄISCHE PATENTANMELDUNG

(11) **EP 0 769 698 A1**
(43) Veröffentlichungstag der Anmeldung: **23.04.1997**
(21) Anmeldenummer: 96115506.6
(22) Anmeldetag: 27.09.1996
(51) Int. Cl.: G01P 3/36, G01H 9/00

(54) **Verfahren und Anordnung zur optischen Drehzahlmessung von Verbrennungsmotoren, insbesondere in Kraftfahrzeugen**

(30) Priorität: 18.10.1995 DE 19538776
(71) Anmelder: ROBERT BOSCH GMBH, 70442 Stuttgart (DE)
(72) Erfinder: Anlauf, Juergen, 73035 Goeppingen (DE); Haaga, Gerhard, 73275 Ohmden (DE)

(57) **Zusammenfassung**

Ein Verfahren bzw. eine Anordnung zur optischen Drehzahlmessung von Verbrennungsmotoren (1), insbesondere in Kraftfahrzeugen (2), sieht vor, den Motor (1) mit einer optischen Abtastvorrichtung (3, 4, 5, 6), insbesondere mit einem Laservibrometer (3), auf Körperschallschwingungen hin abzutasten. Das Abtastsignal (u(t)) wird weiterverarbeitet und die darin enthaltene Drehzahl ermittelt. Dazu wird das Abtastsignal (u(t)) über Tiefpass (7) und FFT-Block (8) in die Spektralfunktion U(f) überführt. Ein Maximumdetektor (10) stellt die Frequenz (fₘₐₓ) mit der größten Schwingungsamplitude fest. Mit dieser Frequenz wird vorzugsweise bei Leerlaufdrehzahl ein optionales Nachlauffilter (12) eingestellt. Die jeweils durchgelassene Frequenz wird in einem Rechner (15) in die zugehörige Drehzahl (n) umgewandelt und ggf. angezeigt (15). Über eine Eingabe (16) wird dem Rechner die Zylinderzahl, Leerlaufdrehzahl und ggf. die Verbrennungstaktart des betreffenden Motors zugeführt. Das berührungslose Verfahren samt Anordnung ist bei Benzin- und Dieselmotoren ohne fahrzeugtypspezifische Adaption universell anwendbar.

## Beschreibung

### Stand der Technik

Die Erfindung geht aus von einem Verfahren bzw. von einer Anordnung zur optischen Drehzahlmessung von Verbrennungsmotoren, insbesondere in Kraftfahrzeugen, der im Oberbegriff des Anspruchs 1 bzw. des Anspruchs 7 definierten Gattung.

Bei der Messung der Motordrehzahl von Verbrennungsmotoren, insbesondere von Kraftfahrzeug-Verbrennungsmotoren, ist es bekannt, eine optisch reflektierende Markierung, z. B. durch Aufkleben, auf einem rotierenden Teil, insbesondere dem Keilriemen des Kühlerlüfters, aufzubringen. Diese optische Markierung wird beleuchtet und der Durchgang an bestimmter Stelle abgetastet. Daraus wird die Motordrehzahl bestimmt. Diese Methode ist umständlich, für jeden Fahrzeugtyp spezifisch und damit immer wieder anders und entsprechend aufwendig und kostenintensiv.

Bekannt zur Feststellung der Motordrehzahl ist auch ein sogenannter oberer Totpunktgeber, der jedoch auch wiederum fahrzeugtypspezifisch ist. Auch die Verwendung von über Einspritzleitungen oder Zündkabel geklemmten Gebern oder sogenannte Triggerzangen unterliegen Problemen hinsichtlich der Dynamik und der Verschmutzung. Darüber hinaus sind sie ebenfalls fahrzeugtypspezifisch und somit nicht generell anwendbar.

Ein zunehmendes Problem ergibt sich daraus, daß moderne Motoren wegen der zunehmenden Kompaktheit und auch wegen der in zunehmendem Maße verwendeten neuen Zündverfahren, beispielsweise ruhende Hochspannungsverteilung oder im Zylinderkopf untergebrachter Zündspule, keine erfaßbare geeignete physikalische Eingangsgröße für die Messung bzw. Erfassung der Motordrehzahl bieten. Bei Otto-Motoren liegt in vielen Fällen noch eine elektrische Größe vor, aus der auf die Drehzahl geschlossen werden kann. Dies ist bei Dieselmotoren gänzlich anders und viel problematischer, da es dort ja nur sehr wenige oder überhaupt keine elektrischen Signale gibt, aus denen die Drehzahl ermittelt werden kann.

Wie bekannt ist, sind im Automobilbau eingehende Schwingungsuntersuchungen notwendig, um an Bauteilen Resonanzphänomene zu analysieren. So ist beispielsweise in einem Artikel "Schwingungen visualisieren" von Martin Feser in der ATZ Automobiltechnische Zeitschrift 96 (1994) 7/8, Seite 433 - 435, ein Laser-Scanning-Vibrometer beschrieben, das in berührungsloser Laser-Doppler-Meßtechnik und schneller FFT-Analyse für angetastete Meßpunkte das Frequenzspektrum ermittelt. Ein Kernstück dieses bekannten Scanning-Vibrometers ist ein Einpunktvibrometer. Im Meßkopf wird der Laserstrahl eines Interferometers mit zwei Abtastspiegeln auf die zu untersuchende Fläche gelenkt. Im optischen Meßkopf befindet sich neben dem Laser-Interferometer und den Abtastspiegeln zusätzlich eine Videokamera, mit der das Meßobjekt beobachtet wird. Anhand des Videobildes wird der Abtastbereich mit unterschiedlich einstellbarer Ortsauflösung definiert und anschließend vom Laserstrahl abgetastet. Durch die Möglichkeit der Frequenzbandselektion ist eine Bestimmung der Formen der Betriebsschwingungen gegeben. Das hier beschriebene Meßsystem befaßt sich ausschließlich mit dem Einsatz bei der Messung von Flächenschwingungen, insbesondere am Beispiel von Autotüren. Dabei geht es anhand von wenigen bestimmten Frequenzen um die Feststellung von Stellen, an denen wegen zu großer Schwingungsamplituden Dämpfungsmaßnahmen möglichst bereits in der Konstruktionsphase ermittelt und eingeführt werden sollen. Eine kontinuierliche Ermittlung und eventuelle Darstellung der auftretenden Schwingungen im Sinne einer Drehzahlermittlung ist hier auch nicht andeutungsweise erwähnt, angedacht oder mit irgendeinem Hinweis dargestellt.

Für die Diagnose von Verbrennungsmotoren und die im Hinblick auf die Verringerung des Ausstoßes von Schadstoffen zu optimierende Einstellung des Motors, besonders auch im Zusammenhang mit der gesetzlich vorgeschriebenen Abgasuntersuchung, ist die genaue Ermittlung und Kenntnis der Motordrehzahl unumgänglich notwendig. Dies soll auf möglichst einfache und kostengünstige Weise zuverlässig und genau ermöglicht werden, ohne daß dabei auf spezifische Erfordernisse und Unterschiede der verschiedenen Kraftfahrzeuge und Motoren viel Rücksicht genommen werden muß.

### Vorteile der Erfindung

Das erfindungsgemäße Verfahren mit den kennzeichnenden Merkmalen des Anspruchs 1 bzw. die erfindungsgemäße Anordnung mit den kennzeichnenden Merkmalen des Anspruchs 7 hat demgegenüber den Vorteil der im wesentlichen universellen Einsatzfähigkeit bei erheblich reduziertem Gesamtaufwand. Ohne Berührung des Motors wird bei Berücksichtigung seiner Zylinderzahl und Verbrennungstaktart, Viertakt bzw. Zweitakt, und ohne Unterschied ob Ottomotor oder Dieselmotor die Drehzahl ermittelt und ggf. angezeigt. Es werden somit keine fahrzeugtypspezifischen Adapter benötigt, wodurch der Aufwand erheblich gemindert ist.

Entsprechend dem grundsätzlichen Gedanken der Erfindung wird der Motorblock bzw. ein geeignetes Teil in seiner Umgebung optisch auf die beim Verbrennungsvorgang entstehenden Körperschallschwingungen hin abgetastet und das dabei entstehende Abtastsignal wird auf geeignete Weise hinsichtlich der im Spektrum enthaltenen, der Zylinderzahl des Motors und seiner Verbrennungstaktart entsprechenden Drehzahl ausgewertet.

Durch die in den weiteren zugeordneten jeweiligen Unteransprüchen aufgeführten Maßnahmen sind vorteilhafte Weiterbildungen und Verbesserungen des im Anspruch 1 angegebenen Verfahrens bzw. der im Anspruch 7 niedergelegten Anordnung möglich.

Gemäß einer besonders vorteilhaften Ausführungsform der Erfindung erfolgt die Abtastung mittels Laserstrahlung. Dazu ist in zweckmäßiger apparatemäßiger Ausgestaltung die Vorrichtung zum optischen Abtasten ein Laservibrometer, welches mit Hilfe von Laserstrahlen die Körperschallschwingungen ermittelt und ein elektrisches Ausgangssignal erzeugt, das proportional zur Elongation des abgetasteten, schwingungsführenden Teiles, Motorblock oder geeignetes Teil in der Umgebung des Motorblocks, ist.

Gemäß zweckmäßiger Weiterbildung des erfindungsgemäßen Verfahrens wird zur Ermittlung der Spektralfunktion das Abtastsignal mittels eines Tiefpasses gefiltert und einer schnellen Fourier-Transformation unterzogen. In apparativer Ausgestaltung enthält dazu die Vorrichtung zum Auswerten des Abtastsignals ein Tiefpassfilter, und zur Gewinnung der zugehörigen Spektralfunktion ist eine Schaltung zur Durchführung einer schnellen Fourier-Transformation des mittels des Tiefpasses gefilterten Abtastsignals vorgesehen.

In weiterer vorteilhafter Ausgestaltung des erfindungsgemäßen Verfahrens wird aus dem Abtastsignal die Frequenz mit der größten Amplitude ermittelt. In vorteilhafter Weise ist dazu apparativ ein Maximum-Detektor vorgesehen, mit dem die Frequenz mit der maximalen Amplitude feststellbar ist. Gemäß einer besonders vorteilhaften Weiterbildung wird zur Verbesserung des Geräuschspannungsabstandes auf diese Frequenz mit der größten Amplitude ein Nachlauffilter (tracking filter) eingestellt, insbesondere bei der Leerlaufdrehzahl des zugehörigen Motors.

Gemäß besonders vorteilhafter Ausgestaltung des erfindungsgemäßen Verfahrens wird mit Hilfe eines Rechners, welchem die Zylinderzahl und ggf. die Verbrennungstaktart des betreffenden Motors eingegeben werden, aus der Frequenz mit der maximalen Amplitude die Motordrehzahl ermittelt und ggf. angezeigt.

### Zeichnung

Die Erfindung ist anhand eines in der Zeichnung dargestellten Ausführungsbeispiels in der nachfolgenden Beschreibung näher erläutert. Es zeigt:

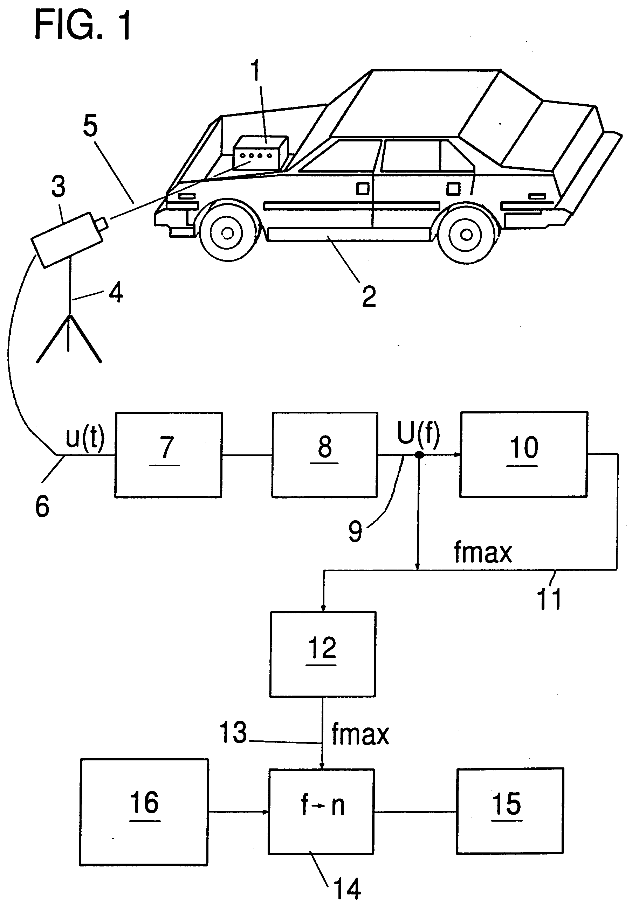

- Fig. 1: schematisch eine Anordnung zur optischen Drehzahlmessung eines Verbrennungsmotors in einem Kraftfahrzeug, wobei die optische Abtastung mittels eines Laservibrometers erfolgt, zusammen mit einer Auswerteschaltung.

### Beschreibung des Ausführungsbeispiels

Die in der Fig. 1 schematisch dargestellte Ausführungsform der Erfindung besteht im wesentlichen aus zwei Vorrichtungen. Zum einen ist dies die Vorrichtung zur optischen Abtastung eines Verbrennungsmotors 1, der z. B. in einem Kraftfahrzeug 2 eingebaut ist. Gemäß einer zweckmäßigen Ausgestaltung der Erfindung wird zur optischen Abtastung ein Laservibrometer 3 benutzt, das beispielsweise auf einem Stativ 4 aufgebaut ist. Mit 5 ist der vom Laservibrometer 3 ausgehende Abtaststrahl, der auf den Motor 1 oder ein geeignetes Teil, welches auch die Motorschwingungen führt, gerichtet ist, sowie koinzident damit der vom Motor 1 in den Laservibrometer 3 hinein reflektierte Strahl bezeichnet. Die zweite Vorrichtung ist die Auswerteschaltung für das auf einer Ausgangsleitung 6 des Laservibrometers 3 anstehende Abtastsignal, welches ein zeitabhängiges elektrisches Signal u(t) ist. Aus diesem Signal wird mit der erfindungsgemäß gestalteten zweiten Vorrichtung das Drehzahlsignal n gewonnen.

Bei Betrieb des Verbrennungsmotors 1 entstehen aufgrund der Verbrennungsvorgänge Körperschallschwingungen sowohl im Motorblock als auch gegebenenfalls in Teilen seiner Umgebung, die wegen festem Anbau an den Motorblock ebenfalls dessen Körperschallschwingungen führen. Die Vibration des Motors 1 mit der einer bestimmten Drehzahl entsprechenden Frequenz wird also hervorgerufen durch sich periodisch wiederholende Verbrennungsvorgänge. Die dabei erzeugten Körperschallschwingungen werden durch die optische Abtastung berührungslos erfaßt und ausgewertet.

Das von der optischen Abtastvorrichtung erzeugte Abtastsignal ist proportional zur Elongation des abgetasteten Motors 1 bzw. seines Motorblocks oder seiner abgetasteten, die Körperschallschwingungen ebenfalls führenden Teile in der Umgebung. Im Spektrum dieses Abtastsignals, im dargestellten Ausführungsbeispiel dem elektrischen Ausgangssignal u(t) des Laservibrometers 3, ist die Motordrehzahl n neben anderen Spektralanteilen enthalten. Durch ein geeignetes Verfahren wird das elektrische Signal u(t) weiterverarbeitet, die enthaltene Drehzahl ermittelt und gegebenenfalls zur Anzeige gebracht.

Gemäß der Erfindung kann, wie in Fig. 1 dargestellt, dazu das Signal u(t) auf Leitung 6 einem Tiefpass 7 zugeführt und mittels einer Schaltung 8, die eine schnelle Fourier-Transformation, nach der sogenannten FTT Methode (Fast Fourier Transformation), durchführt, die frequenzabhängige Spektralfunktion U(f) auf der Ausgangsleitung 9 gewonnen werden. Mittels eines Maximum-Detektors 10 wird aus der Spektralfunktion diejenige Frequenz festgestellt, bei der die größte Schwingungsamplitude auftritt. Diese wird mit fₘₐₓ bezeichnet und vom Ausgang 11 des Maximum-Detektors 10 als Eingang einem Nachlauffilter 12, zugeführt.

Das optionale Nachlauffilter 12, das auch als tracking filter bezeichnet wird, wird auf die Frequenz mit der maximalen Amplitude des Abtastsignals, und zwar vorzugsweise bei der Leerlaufdrehzahl des betreffenden Motors eingestellt. Dem Nachlauffilter 12 wird nach dieser Einstellung, die einmal erfolgt, im Betrieb die Spektralfunktion U(f) auf Leitung 9 als Eingang zugeführt. Da das Nachlauffilter 12 als Fenster wirkt, das auf die Frequenz fₘₐₓ eingestellt ist, wird von der Spektralfunktion U(f) nur der diesem, als Frequenzband anzusprechende, entsprechende Teil über den Ausgang 13 einem Rechner 14 als Eingangsgröße selektiv zugeführt. Das Nachlauffilter 12 dient somit aufgrund seiner Eigenschaft zur Verbesserung des Geräuschspannungsabstands, insbesondere bei höheren Drehzahlen.

Der Rechner 14 ermittelt aus der zugeführten selektierten Frequenz die zugehörige Drehzahl n des Motors 1. Diese Drehzahl n kann, wenn dies erfordert und gewünscht, auf einer Anzeigevorrichtung 15 zur Anzeige gebracht werden. Damit der Rechner 14 die dem jeweiligen Motor 1 entsprechende richtige Drehzahl n aus der zugeführten Frequenz ermittelt, wird über eine Eingabe 16 die zum betreffenden Motor gehörende Zylinderzahl, die zugehörige Leerlaufdrehzahl und gegebenenfalls auch die Verbrennungstaktart, also Viertakt oder Zweitakt, als Eingangsgröße zugeführt.

Die Erfindung stellt somit in besonders vorteilhafter Weise eine berührungslose Drehzahlermittlung und ggf. Drehzahlanzeige zur Verfügung, die keine fahrzeugtypspezifischen Adapter benötigt, sowohl für Benzin- als auch insbesondere für Dieselmotoren und alle Kraftfahrzeugtypen verwendbar ist. Dies ist wegen der Vermeidung unterschiedlicher Meßsysteme ein erheblicher Fortschritt, der Werkstätten sowie Prüf- und Untersuchungsstellen erheblich entlastet.

## Patentansprüche

1. Verfahren zur optischen Drehzahlmessung von Verbrennungsmotoren (1), insbesondere in Kraftfahrzeugen (2), dadurch gekennzeichnet, daß der Motorblock bzw. ein geeignetes Teil in seiner Umgebung optisch auf die beim Verbrennungsvorgang entstehenden Körperschallschwingungen hin abgetastet wird und daß das dabei entstehende Abtastsignal (u(t))auf geeignete Weise hinsichtlich der im Spektrum enthaltenen, der Zylinderzahl des Motors und seiner Verbrennungstaktart entsprechenden Drehzahl ausgewertet wird.

2. Verfahren nach Anspruch 1, dadurch gekennzeichnet, daß die Abtastung mittels Laserstrahlung erfolgt.

3. Verfahren nach Anspruch 1 oder 2, dadurch gekennzeichnet, daß zur Ermittlung der Spektralfunktion (U(f)) das Abtastsignal (u(t)) mittels eines Tiefpasses (7) gefiltert und einer schnellen Fourier-Transformation unterzogen wird.

4. Verfahren nach Anspruch 1, 2 oder 3, dadurch gekennzeichnet, daß aus dem Abtastsignal (u(t)) die Frequenz (fₘₐₓ) mit der größten Amplitude ermittelt wird.

5. Verfahren nach Anspruch 4, dadurch gekennzeichnet, daß zur Verbesserung des Geräuschspannungsabstandes auf diese Frequenz (fₘₐₓ) mit der größten Amplitude ein Nachlauffilter (12) (tracking filter) eingestellt wird, insbesondere bei der Leerlaufdrehzahl des zugehörigen Motors (1).

6. Verfahren nach Anspruch 4 oder 5, dadurch gekennzeichnet, daß mit Hilfe eines Rechners (14), welchem die Zylinderzahl, die Leerlaufdrehzahl und ggf. die Verbrennungstaktart des betreffenden Motors (1) eingegeben (16) werden, aus der Frequenz (fₘₐₓ) mit der maximalen Amplitude die Motordrehzahl (n) ermittelt und ggf. angezeigt (15) wird.

7. Anordnung zur optischen Drehzahlmessung von Verbrennungsmotoren (1), insbesondere in Kraftfahrzeugen (2), dadurch gekennzeichnet, daß eine Vorrichtung (3, 4, 5, 6) vorgesehen ist zur optischen Abtastung des Motorblocks (1) bzw. eines geeigneten Teils in seiner Umgebung auf die beim Verbrennungsvorgang entstehenden Körperschallschwingungen hin, und daß eine Vorrichtung (7 - 16) vorgesehen ist, mit deren Hilfe das bei der optischen Abtastung entstehende Abtastsignal (u(t))auf geeignete Weise hinsichtlich der im Spektrum enthaltenen, der Zylinderzahl und der Verbrennungstaktart entsprechenden Drehzahl (n) auswertbar ist.

8. Anordnung nach Anspruch 7, dadurch gekennzeichnet, daß die Vorrichtung zum optischen Abtasten (3, 4, 5, 6) ein Laservibrometer (3) enthält, welches mit Hilfe von Laserstrahlen (5) die Körperschallschwingungen ermittelt und ein elektrisches Ausgangssignal (u(t), 6) erzeugt, das proportional zur Elongation des abgetasteten, schwingungsführenden Teiles, Motorblock oder geeignetes Teil in der Umgebung des Motorblocks, ist.

9. Anordnung nach Anspruch 7 oder 8, dadurch gekennzeichnet, daß die Vorrichtung zum Auswerten des Abtastsignals (u(t)) ein Tiefpassfilter (7) enthält, und daß zur Gewinnung der zugehörigen Spektralfunktion (U(f), 9) eine Schaltung (8) zur Durchführung einer schnellen Fourier-Transformation des mittels des Tiefpasses (7) gefilterten Abtastsignals (u(t)) vorgesehen ist.

10. Anordnung nach Anspruch 7, 8 oder 9, dadurch gekennzeichnet, daß die Vorrichtung zum Auswerten des Abtastsignals einen Rechner (14) enthält, dem die Zylinderzahl, die Leerlaufdrehzahl und ggf. die Verbrennungstaktart des betreffenden Motors (1) eingebbar ist, um aus der Frequenz (fₘₐₓ) mit der maximalen Amplitude die Motordrehzahl (n) zu ermitteln und ggf. auf einer Anzeige (15) anzuzeigen.

11. Anordnung nach Anspruch 7, 8, 9, oder 10, dadurch gekennzeichnet, daß ein Maximum Detektor (10) vorgesehen ist, mit dem die Frequenz (fₘₐₓ) mit der maximalen Amplitude feststellbar ist.

12. Anordnung nach einem der Ansprüche 7 bis 11, dadurch gekennzeichnet, daß zur Verbesserung des Geräuschspannungsabstands ein Nachlauffilter (tracking filter) (12) vorgesehen ist, das auf die Frequenz (fₘₐₓ) mit der maximalen Amplitude des Abtastsignals (u(t)), vorzugsweise bei der Leerlaufdrehzahl des betreffenden Motors (1), einstellbar ist.
